# EUROPEAN PATENT SPECIFICATION

(11) **EP 0 990 979 B1**
(45) Date of publication and mention of the grant of the patent: **20.08.2003**
(21) Application number: 99420197.8
(22) Date of filing: 16.09.1999
(51) Int. Cl.: G06F 3/00

(54) **Image transformation device for producing caricatures**
Bildtransformationsvorrichtung zum Erzeugen von Karikaturen
Dispositif de transformation d'image permettant d'obtenir des caricatures

(30) Priority: 30.09.1998 FR 9812403
(43) Date of publication of application: 05.04.2000
(73) Proprietor: EASTMAN KODAK COMPANY, Rochester, New York 14650-2201 (US)
(72) Inventor: Vachette, Thierry, 71102 Chalon sur Saône Cedex (FR); Philiponet, Etienne Pierre, 71102 Chalon sur Saône Cedex (FR)
(74) Representative: Buff, Michel

(56) References cited:
- WO-A-85/03152
- US-A- 4 672 464

## Description

The invention relates to image transformation and more especially to distorting faces for amusement purposes and more especially for producing caricatures of the user's face.

It is common, in amusement parks, to let users produce customized photographs. The appearance of computers in combination with image processing software allows photographs to be provided in which users can modify the background or the environment in which they have been photographed. Image processing software has also enabled image distortion.

The invention offers to provide users with the possibility of easily producing distorted graphic representations of a face, and more especially caricatures of their own face or that of a well known person.

The object of the invention is an image transformation device that allows caricatures to be produced, comprising: a) a computer capable of receiving digital files and supplied with many image transformation algorithms for, according to a control signal, modifying the digital file and producing a displayable caricature file; and b) a unit supplied with: 1) a camera for supplying the digital file representing a person placed in the camera's field of view; 2) an interactive interface which the user can operate in order to supply a control signal usable by the computer; 3) a display device for displaying the image of the digital caricature file sent by the computer; and 4) means for communication with the computer for delivering the digital file and the control signal to the computer, and the displayable caricature file to the display device. This device is characterized in that the interface comprises: i) a transparent envelope enclosing the display device, and ii) at least one sensor sensitive to the position of the user's hands in relation to the envelope to produce the control signal; and in that the device comprises a means for selecting the various image transformation algorithms to modify the selection of the algorithm during use when set conditions are fulfilled.

In one advantageous embodiment the camera supplies a representation of the face of the person placed in the camera's field of view. More especially the person placed in the camera's field of view is the user of the image transformation device. In this case, users distort their own image.

In another embodiment, the person placed in the camera's field of view is not the user of the image transformation device. Advantageously, in this embodiment one can either display the distortions generated by the user on an auxiliary screen to amuse the onlookers, or use two image transformation devices whose cameras are crossed.

Other characteristics and advantages of the invention will appear on reading the following description, given as an example, with reference to the annexed drawings.

Figure 1 represents diagrammatically, in profile, a user in front of a device that complies with the invention.

Figure 2 represents another way of using devices complying with the invention.

Figure 3 represents, in front view, part of an embodiment of the device complying with the invention.

Figure 4 represent diagrammatically the production of graphic or caricature representations from the images distorted by use of the device according to the invention.

The image transformation device 10 according to the invention comprises a computer 80 arranged to be capable of processing images. This computer, which can for example be a PC, is linked to a camera 50, which can be either a digital camera such as for example the Kodak Digital Science™ cameras, DC210™, DC220™, or DC260™, or a digital video camera such as for example the Kodak Digital Science™ cameras, DVC300™ or DVC323™ or any other equivalent camera such as for example a JAY® video camera known by the reference CV-M1000. Using a connection 52, the digital camera transmits to the computer 80 a digital file of a person 30 located in the field of view of the camera 50. In one advantageous embodiment, the camera is arranged to frame the face of the person placed in the camera's field of view. When a camera is used, it is preferable to refresh the digital file every 0.5 s. However as will be understood following the explanation of the operation of the device according to the invention, the digital file can only be refreshed infrequently, for example every 10 s. Usually the computer comprises a memory loaded with several image transformation algorithms that can be selected at will to process the various images received.

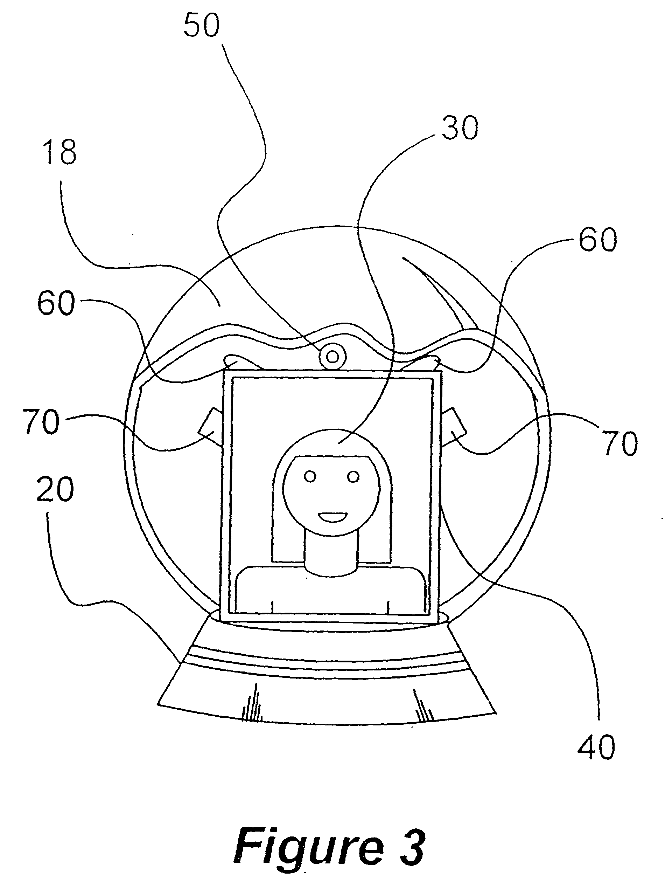

The device further comprises an interface 12 which will be described in more detail below with reference to Figure 3. The interface 12 is linked to the computer to supply it with control signals. For the moment, it is sufficient to know that this interface has the appearance of a crystal ball that encloses a display device 40 linked to the computer 80 by a connection 42. In this way, the computer 80 can permanently display on the display device 40 an image 130 of the digital file received and that it has processed.

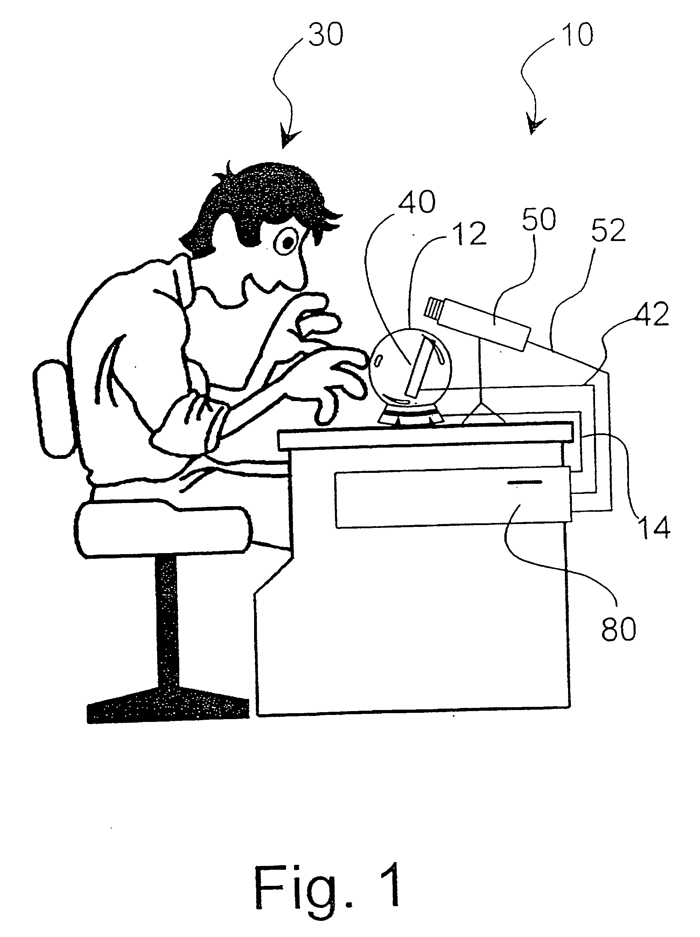

One operating mode of the device according to the invention will be described briefly with reference to Figure 1. An operator 30, approaching the image transformation device 10 according to the invention, sees their image appear on the display device 40 and more especially their face. As the interface 12 has the shape of a crystal ball it invites hand movements around its transparent envelope, which causes the interface to transmit a control signal whose values depend on the position of the user's hands in relation to the envelope. The control signal, transmitted to the computer 80, starts an image transformation algorithm contained in the computer. Advantageously, the transformation algorithm is an image distortion algorithm, such as for example a lateral or vertical shrinking or elongation, a barrel type distortion, a horizontal or vertical symmetrical effect, a bas relief or outline effect, etc.

By moving their hands, users control the amount of distortion and can thus distort their face at will, which allows them to display various caricatures of their face. Advantageously, the computer has a memory to save the processed images.

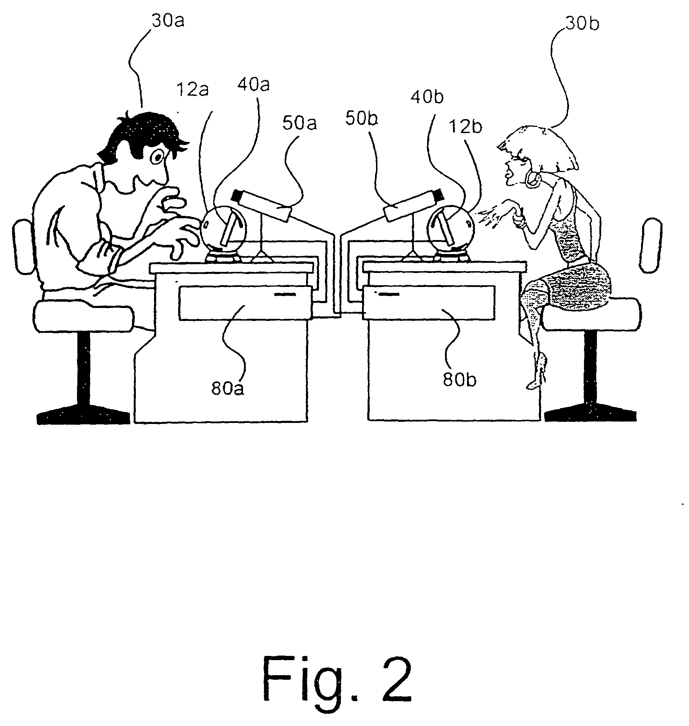

In another operating mode, represented in Figure 2, two devices according to the invention are used. These device are similar to that described with reference to Figure 1. In Figure 2, the letters "a" and "b" have been added to various references to identify more easily the components of one or the other device according to the invention. Identical references refer to similar components. In this operating mode, each operator is placed in a separate camera's field of view, and the image is sent to a separate computer. The camera 50a sends the digital file for user 30a to computer 80b and the camera 50b sends the digital file for user 30b to computer 80a. The other connections are identical to those described with reference to Figure 1. In this way the user 30a distorts the face of the user 30b, while the user 30b distorts the face of user 30a.

It is evident that more than two devices could be linked together so that a camera providing a digital file corresponding to a specific user to a computer operated by another user.

Clearly if the user only has one transformation algorithm, the image transformation possibilities will be limited and the number of possible caricatures low. Thus the computer memory contains many distortion programs that can be selected in various ways. In one particular embodiment, the computer itself is programmed to modify the algorithm during use after a set time. The computer can select the algorithm according to a set or random sequence. Clearly the set sequence can partially cover the preceding series, each series being ended when the user is replaced by a new user or after a set time. In another embodiment, the new algorithm is determined by using the levels of the control signals coming from the interface. For example, the control signal level should have to pass an initial upper threshold, indicating that a user is using the device according to the invention, then fall below a second lower threshold, indicating that the user's hands have moved away from the interface. Clearly the level of the upper threshold and the level of the lower threshold can be identical.

The interface used in the device according to the invention will now be described in some more detail. In order to better understand the interface and to have a more detailed description, please refer to the French Patent Application 9800871 filed on 22 January 1998 and the European Patent Application 98420115.2 filed on 6 July 1998. As can be seen in Figure 3, the interface according to the invention, from which part has been removed to better show the interior, comprises a practically spherical and transparent part or transparent envelope 18 arranged on a base 20. The practically spherical shape has the advantage of reminding people of a crystal ball. By the association of ideas the person coming close to the interface automatically wants to move their hands around the practically spherical surface to -make something magical appear.

Inside the envelope 18, there is at least one sensor 70 sensitive to the position of the user's hands in relation to the envelope. For example, the sensor is associated with a source 60 and the flux reflected by the user's hands is detected. To eliminate noise problems, an emission can be used having a given frequency associated with synchronous detection. In the embodiment represented two detection channels have been used, one for each hand, in order to manage a combination of separate effects. Obviously, as shown in the European Patent Application mentioned previously, more than two channels can also be used.

In the device according to the invention, a display device 40 was arranged inside the envelope 18. In a specific embodiment a screen sold by the Sony company with the reference XV-M30E was used. The display device 40 receives from the computer a digital file representing a caricature of the user's face. In this way the user can move their hands to modify in real time the image received and displayed by the display device 40.

In one especially advantageous embodiment, such as that shown in Figure 3, the camera 50 is itself also located inside the transparent envelope 18. This type of arrangement allows the user's face to be framed in relation to the camera.

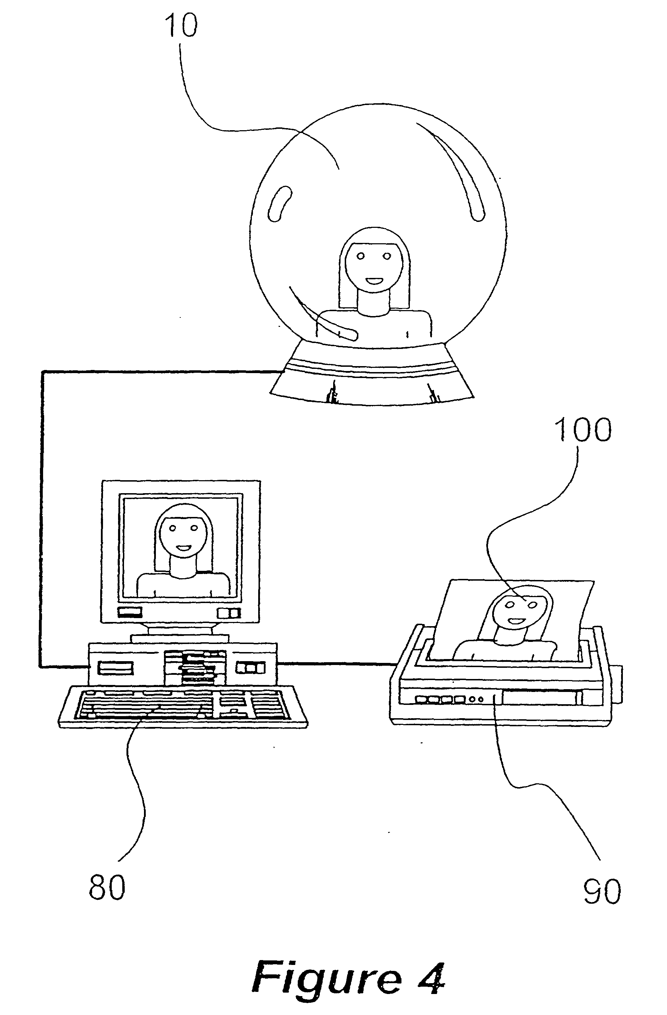

In one especially advantageous embodiment shown in Figure 4, the device 10 according to the invention is associated with a printer 90 which prints caricatures 100 that the user can keep. In the embodiment used, the printer was a Kodak XLS-8600-PS ™ printer. Advantageously, the computer 80 comprises a memory (not shown) to record the images it has processed. The computer 80 managing the image distortion or transformation is arranged to record in its memory the digital file transformed and sent for display on the display device 40. Control of the recording can be obtained by any suitable means such as for example a pedal that can be operated for example by knee or foot pressure. A recording can be triggered automatically after a given period of time such as for example every 5 s or every 10 s. In this case, it will be advantageous for the computer 80 to supply the user with an indication of the time remaining to run before the automatic recording. This indication can take any conventional form such as for example a meter displaying the decrease of a number to zero, or the movement of a cursor along a finite length or any other suitable indication. This indication allows users to freeze themselves in one position where their distorted image satisfies them for creating a digital file representing the caricature displayed on the display device 40.

It can be advantageous, when image recording is obtained automatically after a set period of time, to select a new image distortion algorithm after each recording or after a set number of recordings.

In certain embodiments it can be advantageous to show to others the caricatures produced by users of the device according to the invention. Thus the computer or computers will be linked to a large sized display screen.

## Claims

1. An image transformation device (10) enabling caricatures to be obtained, comprising:
a) a computer (80) capable of receiving a digital file and loaded with many image transformation algorithms for, according to a control signal, modifying the digital file and supplying a displayable caricature file; and
b) a component provided with:
1) a camera (50) to supply the digital file representing a person (30a; 30b) placed in the camera's field of view;
2) an interactive interface (12) on which a user (30) can operate to supply the control signal useable by the computer;
3) a display device (40) for displaying the image of the digital caricature file sent on by the computer; and
4) communication means (14, 42, 52) with the computer to deliver the digital file and the control signal to the computer and the displayable caricature file to the display device; and **characterized in that** the interface (12) comprises:
i) a transparent envelope (18) surrounding the display device; and
ii) at least one sensor sensitive (70) to the position of the user's hands in relation to the envelope to produce the control signal; and **in that** the device comprises a means for selecting the various image transformation algorithms to modify the selection of the algorithm during use when set conditions are fulfilled.

2. A device according to Claim 1 wherein the camera is arranged inside the envelope.

3. A device according to Claim 1 or 2 wherein the selection of the algorithm used by the computer is automatically modified after a set period.

4. A device according to Claim 1 or 2 wherein the selection of the algorithm used by the computer is based on the successive levels of the control signal.

5. A device according to any one of the preceding claims wherein the computer comprises a memory to record the caricatures produced.

6. A device according to Claim 5 wherein the recording is released periodically.

7. A device according to Claim 6 wherein modification of the selection of the algorithm used by the computer is synchronized with the release of the saving of the caricature file.

8. A device according to any one of the preceding claims wherein the computer is linked to an auxiliary screen to make the caricatures visible to a large number of people.

9. The use of at least two devices according to any one of the previous claims wherein each camera sends the digital file it produces to another device and each computer processes a digital file coming from another device.

## Patentansprüche

1. Bildumwandlungseinrichtung (10) zum Erzeugen von Karikaturen mit
a) einem Rechner (80), der eine Digitaldatei empfangen kann und mit vielen Bildumwandlungsalgorithmen bestückt ist, um entsprechend einem Steuerungssignal die Digitaldatei zu modifizieren und eine anzeigbare Karikaturdatei zu liefern; und
b) einer Komponente, ausgestattet mit
1) einer Kamera (50), welche die Digitaldatei liefert, die eine im Bildwinkel der Kamera plazierte Person (30a; 30b) darstellt;
2) einer interaktiven Schnittstelle (12), die ein Benutzer (30) bedienen kann, um das vom Rechner benutzbare Steuerungssignal zu liefern;
3) einem Sichtgerät (40) zum Anzeigen des Bildes der vom Rechner weitergeleiteten Digitalkarikaturdatei; und
4) Verbindungsmitteln (14, 42, 52) mit dem Rechner, um die Digitaldatei und das Steuerungssignal dem Rechner und die anzeigbare Karikaturdatei dem Sichtgerät zuzuführen;
**dadurch gekennzeichnet, dass** die Schnittstelle (12) folgende Komponenten aufweist:
i) eine transparente Umhüllung (18), welche das Sichtgerät umgibt; und
ii) mindestens einen Sensor (70), der für die Lage der Hände des Benutzers in Bezug zur Umhüllung empfindlich ist, um das Steuerungssignal zu erzeugen;
und dass die Einrichtung ein Mittel zum Auswählen der verschiedenen Bildumwandlungsalgorithmen aufweist, um den ausgewählten Algorithmus während der Benutzung zu modifizieren, wenn die festgelegten Bedingungen erfüllt sind.

2. Bildumwandlungseinrichtung nach Anspruch 1, **dadurch gekennzeichnet, dass** die Kamera innerhalb der Umhüllung angeordnet ist.

3. Bildumwandlungseinrichtung nach Anspruch 1 oder 2, **dadurch gekennzeichnet, dass** die vom Rechner benutzte Auswahl des Algorithmus nach einer festgelegten Zeitspanne automatisch modifiziert wird.

4. Bildumwandlungseinrichtung nach Anspruch 1 oder 2, **dadurch gekennzeichnet, dass** die vom Rechner benutzte Auswahl des Algorithmus auf den aufeinanderfolgenden Pegeln des Steuerungssignals basiert.

5. Bildumwandlungseinrichtung nach einem der vorhergehenden Ansprüche, **dadurch gekennzeichnet, dass** der Rechner einen Speicher aufweist, um die erzeugten Karikaturen zu speichern.

6. Bildumwandlungseinrichtung nach Anspruch 5, **dadurch gekennzeichnet, dass** die Speicherung periodisch ausgelöst wird.

7. Bildumwandlungseinrichtung nach Anspruch 6, **dadurch gekennzeichnet, dass** die Modifizierung der Auswahl des vom Rechner benutzten Algorithmus mit dem Auslösen der Speicherung der Karikaturdatei synchronisiert wird.

8. Bildumwandlungseinrichtung nach einem der vorhergehenden Ansprüche, **dadurch gekennzeichnet, dass** der Rechner mit einem zusätzlichen Bildschirm verbunden ist, um die Karikaturen einer großen Anzahl von Leuten sichtbar zu machen.

9. Verwendung von mindestens zwei Bildumwandlungseinrichtungen nach einem der vorhergehenden Ansprüche, **dadurch gekennzeichnet, dass** jede Kamera die von ihr erzeugte Digitaldatei einer anderen Bildumwandlungseinrichtung zuführt und jeder Rechner die von einer anderen Bildumwandlungseinrichtung kommende Digitaldatei verarbeitet.

## Revendications

1. Dispositif de transformation d'images (10) permettant d'obtenir des caricatures, comprenant :
a) un calculateur (80) susceptible de recevoir un fichier numérique et muni d'une pluralité d'algorithmes de transformation d'images pour, en fonction d'un signal de commande, modifier ce fichier numérique et fournir un fichier caricature affichable ; et
b) un élément muni :
1) d'un moyen de prise de vue (50) pour fournir le fichier numérique représentatif d'une personne (30a ; 30b) disposée dans le champ du moyen de prise de vues ;
2) d'une interface interactive (12) sur laquelle peut agir un utilisateur (30) afin de fournir le signal de commande utilisable par le calculateur ;
3) d'un dispositif d'affichage (40) pour afficher l'image du fichier caricature numérique renvoyé par le calculateur ; et
4) de moyens de communication (14, 42, 52) avec le calculateur pour délivrer au calculateur le fichier numérique et le signal de commande et au dispositif d'affichage le fichier caricature affichable ; et
**caractérisé en ce que** l'interface (12) comprend :
i) une enveloppe transparente (18) entourant le dispositif d'affichage; et
ii) au moins un capteur (70) sensible à la position des mains de l'utilisateur par rapport à l'enveloppe pour produire le signal de commande ; et **en ce que** le dispositif comprend un moyen de sélection des divers algorithmes de transformations d'images pour modifier la sélection de l'algorithme en cours d'utilisation lorsque des conditions déterminées sont remplies.

2. Dispositif selon la revendication 1 dans lequel le moyen de prise de vues est disposé à l'intérieur de l'enveloppe.

3. Dispositif selon la revendication 1 ou 2 dans lequel la sélection de l'algorithme utilisé par l'ordinateur est modifiée automatiquement après une période déterminée.

4. Dispositif selon la revendication 1 ou 2 dans lequel la sélection de l'algorithme utilisé par l'ordinateur est basée sur les niveaux successifs du signal de commande.

5. Dispositif selon l'une quelconque des revendications précédentes dans lequel l'ordinateur comprend une mémoire pour enregistrer les caricatures produites.

6. Dispositif selon la revendication 5 dans lequel l'enregistrement est déclenché périodiquement.

7. Dispositif selon la revendication 6 dans lequel la modification de la sélection de l'algorithme utilisé par l'ordinateur est synchronisée avec le déclenchement de la mémorisation du fichier caricature.

8. Dispositif selon l'une quelconque des revendications précédentes dans lequel l'ordinateur est relié à un écran auxiliaire de manière à rendre les caricatures visibles par un grand nombre de personnes.

9. Utilisation d'au moins deux dispositifs selon l'une quelconque des revendications précédentes dans lequel chaque moyen de prise de vues délivre le fichier numérique qu'il produit à un autre dispositif et chaque ordinateur traite un fichier numérique provenant d'un autre dispositif.
